# EUROPÄISCHE PATENTSCHRIFT

(11) **EP 1 131 603 B1**
(45) Veröffentlichungstag und Bekanntmachung des Hinweises auf die Patenterteilung: **11.06.2003**
(21) Anmeldenummer: 99958019.4
(22) Anmeldetag: 11.11.1999
(51) Int. Cl.: G01C 21/34

(54) **NAVIGATIONSVORRICHTUNG ZUR MULTIMEDIAGESTÜTZTEN NAVIGATION**
NAVIGATION DEVICE FOR MULTIMEDIA-ASSISTED NAVIGATION
SYSTEME DE NAVIGATION POUR NAVIGATION ASSISTEE PAR MULTIMEDIA

(30) Priorität: 16.11.1998 DE 19852662
(43) Veröffentlichungstag der Anmeldung: 12.09.2001
(73) Patentinhaber: ROBERT BOSCH GMBH, 70442 Stuttgart (DE)
(72) Erfinder: PETZOLD, Bernd, D-31515 Wunstorf (DE)
(86) Internationale Anmeldenummer: EP9908655
(87) Internationale Veröffentlichungsnummer: WO00029810

(56) Entgegenhaltungen:
- EP-A- 0 323 245
- EP-A- 0 837 434
- WO-A-97/18440
- DE-A- 19 617 764
- US-A- 5 177 685

## Beschreibung

### Stand der Technik

Die Erfindung geht aus von einer Navigationsvorrichtung in einem Kraftfahrzeug nach der Gattung des unabhängigen Patentanspruchs. Bei bisherigen Navigationssystemen werden dem Fahrer Fahranweisungen gegeben, die sich im wesentlichen auf Entfernungs- und Richtungsangaben beschränken. Diese Fahranweisungen werden durch die optische Darstellung in einer Karte verdeutlicht. Es ist schon ein Informationsträger für eine Navigationsvorrichtung bekannt, (Zeitschrift Teletraffic, Telepublic-Verlag GmbH & Co. Medien KG Hannover, Ausgabe Juni/Juli 1998, Seite 20 ff.) auf dem Daten gespeichert sind, die die Projektion einer dreidimensionalen Szene erlauben, in die Gebäude eingezeichnet sind, die dem Benutzer die Orientierung erleichtern sollen. Im Nahbereich erfolgt eine herkömmliche Kartendarstellung. Die Darstellung ist dabei unterschiedlich von der realen Sicht des Benutzers. Auch bei diesem System benötigt der Benutzer Zeit, um sich orientieren zu können.

Aus der US 5,177,685 ist ein Navigationssystem bekannt, das gesprochene Informationen an den Fahrer eines Fahrzeugs ausgibt. Es ist eine Kartendatenbasis vorhanden, die auch Informationen zu Landmarken wie z.B. Ampeln oder Gebäuden ausgibt. Fahranweisungen werden im Bezug auf diese Landmarken akustisch ausgegeben. Änderungen in der Kartendatenbasis werden über Funk an die Navigationsvorrichtung übertragen.

Aus der EP 837 434 A1 ist ein Navigationssystem bekannt, bei dem leicht zu verstehende Fahrhinweise akustisch ausgegeben werden, die sich auf markante Landmarken an der Fahrstrecke beziehen. Bei der Ausgabe wird berücksichtigt, ob die Landmarke von dem Ausgabepunkt aus sichtbar ist. Als Landmarken werden z.B. Tankstellen, Polizeistationen oder Geschäfte verwendet.

### Vorteile der Erfindung

Die erfindungsgemäße Navigationsvorrichtung mit den Merkmalen des unabhängigen Patentanspruchs hat demgegenüber den Vorteil, dass Bezeichnungen und/oder Beschreibungen von markanten Objekten in der Umgebung des Straßennetzes auf dem Informationsträger gespeichert sind und diese Bezeichnungen und/oder Beschreibungen akustisch ausgebbar sind. Unter markanten Objekten sind dabei z. B. Gebäude, Geländeformen wie Geländeausschnitte oder Erhebungen, Lichtzeichenanlagen, Verkehrsschilder, Bäume, Geschäfte oder auch Denkmäler zu verstehen. Dabei kann es ausreichend sein, ein solches markantes Objekt mit seiner Bezeichnung, z. B. "Post" oder "Bahnhof" zu benennen oder die Bezeichnung zu erweitern z. B. "rotes Wohnhaus" oder "blaues Fabrikgebäude". Solche erweiterten Bezeichnungen soll der Begriff Beschreibung umfassen. Werden diese markanten Objekte für Fahranweisungen durch die Navigationsvorrichtung ausgegeben, so wird dem Benutzer während der Fahrt die Orientierung im Straßenverkehr anhand der markanten und daher unschwer zu erkennenden Objekte in der Umgebung des Fahrzeugs erleichtert. Durch die akustische Ausgabe muss der Fahrer nicht den Blick vom Straßenverkehr nehmen und sich auf einen Bildschirm konzentrieren. Durch den hohen Wiedererkennungswert eines markanten Objektes, auch bei größeren Entfernungen, kann in der Regel eine genaue Entfernungsangabe in Metern entfallen, da diese für viele Benutzer im Straßenverkehr sehr schwer nachzuvollziehen ist, insbesondere in einem Gebiet, das dem Benutzer nicht bekannt ist.

Insbesondere bei Gebäuden, an denen mehrere Straßen vorbeiführen, ist dabei ein solches Objekt mit mehreren Ansichten auf dem Informationsträger gespeichert, so dass dem Benutzer in Abhängigkeit von seiner Position die Ansicht geboten wird, die er sieht.

Ferner sind auf dem Informationsträger Videoinformationen zu den markanten Objekten gespeichert, so dass diese Videoinformation optisch ausgebbar sind. Dies bietet den Vorteil, dass zur Unterstützung der akustischen Ausgabe eine optische Anzeige des markanten Objektes erfolgen kann. Dies kann dem Benutzer die Orientierung gegenüber einer rein akustischen Ausgabe erleichtern, insbesondere bei lauten Nebengeräuschen.

Weiterhin ist es vorteilhaft, dass neben der Position des markanten Objektes in einer digitalen Karte auf dem Informationsträger die geographische Position des markanten Objektes gespeichert ist. Hierdurch ist es möglich, auch Objekte mit einzubeziehen, die sich nicht direkt im oder am Straßennetz befinden, sondern davon abliegen, z.B. eine Geländeerhebung. Es ist weiterhin vorteilhaft, die Navigationsvorrichtung zur Navigation eines Fahrzeugs in einem Straßennetz so zu verwenden, dass akustische Fahranweisungen ausgebbar sind, indem Bezeichnungen und/oder Beschreibungen der markanten Objekte mit Richtungsangaben und Ortsbezügen verknüpft sind, z. B. "hinter der roten Backsteinkirche rechts ab", "vor dem Hauptbahnhof links". In dem die Fahranweisungen Bezüge zu diesen markanten Objekten beinhalten, erhält der Fahrer eine Fahranweisung, wie sie auch in der Alltagssprache üblich ist und wie eine Wegbeschreibung zwischen Personen erfolgt. Sie ist somit für ihn leicht verständlich und erfordert kein Abstraktionsvermögen.

Weiterhin ist es vorteilhaft, in einer optischen Ausgabe der markanten Objekte Richtungsangaben zu ergänzen. So erhält der Benutzer neben der zusätzlichen, optischen Information auch noch eine Information über die angegebene Richtung.

Durch die in den abhängigen Ansprüchen aufgeführten Maßnahmen sind vorteilhafte Weiterbildungen und Verbesserungen der im unabhängigen Patentanspruch angegebenen Navigationsvorrichtung möglich.

Weiterhin ist es vorteilhaft, daß die Daten zusätzlicher, markanter Objekte einschließlich ihrer Position in der digitalen Karte der Navigationsvorrichtung über einen mobilen Datenträger und/oder über eine Funkverbindung zuführbar sind. Dies ermöglicht es, selbst Fahranweisungen zu erstellen, insbesondere unter Ausnutzung eines zusätzlichen Rechners. Diese Informationen können für Strecken verwendet werden, zu denen auf dem Informationsträger keine Informationen abgespeichert sind oder zu denen für das das Erreichen des Fahrziels, insbesondere auf dem letzten Stück einer Fahrt, die vorliegenden Informationen nicht genau genug sind. Dieser Fall kann z.B. auftreten, wenn ein Wohnhaus in einem Wohngebiet oder eine Firma in einem Industriegebiet erreicht werden sollen. Darüber hinaus ist es möglich, die Bezeichnung und/oder Beschreibung von zusätzlichen markanten Objekten mit Werbeinformationen zu verbinden.

Weiterhin ist es vorteilhaft, daß zusätzliche Daten markanter Objekte über eine Funkverbindung mit einer Dienstezentrale empfangen werden können. So ist es möglich, aktualisierte oder auch, falls erforderlich, genauere Daten als die auf dem Informationsträger gespeicherten über Funk zu erhalten. Hierdurch kann der Speicherbedarf im Fahrzeug gesenkt werden.

Weiterhin ist es vorteilhaft, daß zumindest ein Teil der Navigationsvorrichtung auch als Mobilteil aus dem Fahrzeug entnehmbar ist, so daß sie auch anderen Verkehrsteilnehmern, wie z. B. Fußgängern, zur Verfügung steht.

### Zeichnung

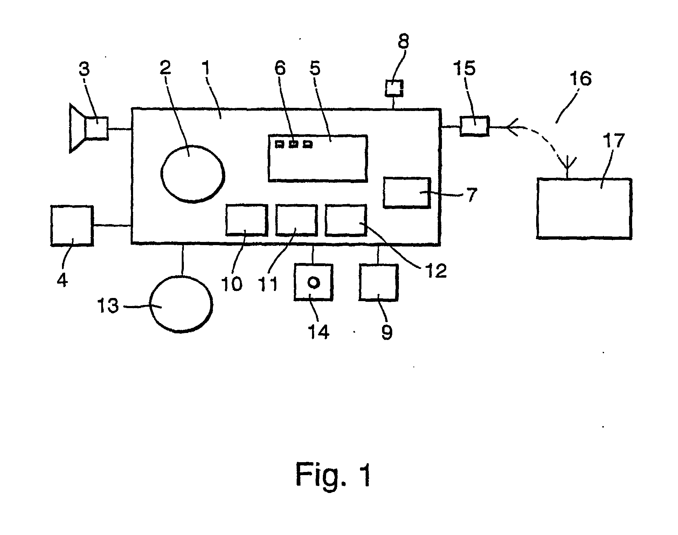

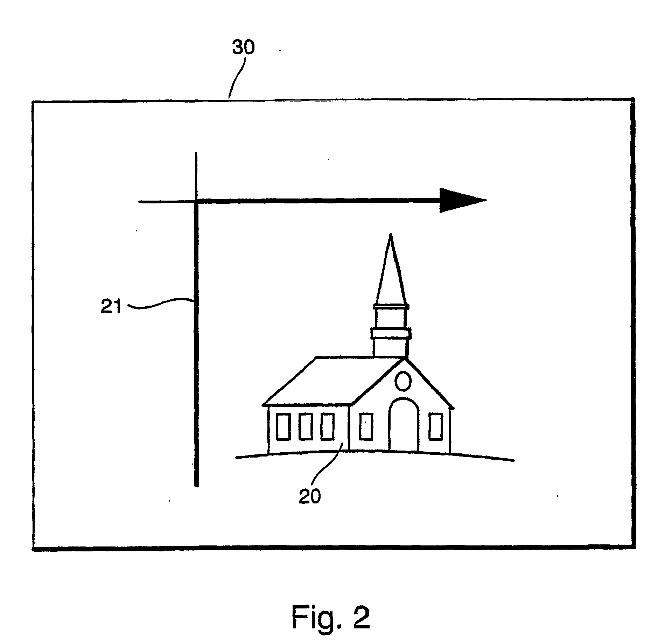

Ausführungsbeispiele der Erfindung sind in der Zeichnung dargestellt und in der nachfolgenden Beschreibung näher erläutert. Es zeigen Figur 1 eine erfindungsgemäße Navigationsvorrichtung und Figur 2 eine Darstellung der optischen Ausgabe von Videoinformationen der markanten Objekten.

### Beschreibung des Ausführungsbeispiels

In Figur 1 ist eine erfindungsgemäße Navigationsvorrichtung 1 mit einem Laufwerk für einen Informationsträger 2, auf dem die Daten der markanten Objekte gespeichert sind, dargestellt. Die Navigationsvorrichtung ist mit einer Audioausgabe 3 und einer Videoausgabe 4 ausgestattet. Ferner verfügt die Navigationsvorrichtung über eine Eingabeeinheit 5, die mit Drehoder Drucktasten 6 ausgestattet ist. Ferner verfügt die Navigationsvorrichtung über eine Rechnereinheit zur Positionsbestimmung 7, einen GPS-Empfänger mit Antenne 8 und ist mit Fahrzeugsensoren 9, insbesondere zur Positionsbestimmung, verbunden. Weiterhin verfügt die Navigationsvorrichtung 1 über eine Einheit zur Systemverwaltung 10, eine Recheneinheit zur Fahrtroutenbestimmung 11 und eine Recheneinheit für die Ausgabe der Fahranweisungen 12. Die Navigationsvorrichtung 1 verfügt optional über ein weiteres Laufwerk 13 für einen zusätzlichen Informationsträger, auf dem eine digitale Karte gespeichert sein kann. Weiterhin ist optional ein Laufwerk 14 für einen wiederbeschreibbaren Informationsträger vorgesehen, insbesondere für eine Diskette. Weiterhin ist die Navigationsvorrichtung 1 über eine Sende - und Empfänger vorrichtung 15 über eine Funkverbindung 16 mit einer Dienstzentrale 17 in Verbindung bringbar.

Zu Beginn einer Fahrt oder bei einer Änderung des Fahrziels gibt der Benutzer über die Tasten 6 in die Eingabevorrichtung 5 ein Fahrziel in die Navigationsvorrichtung 1 ein. Die Kontrolle der Eingabe erfolgt dabei über die Videoausgabe 4. Optional kann die Eingabe auch über die Videoausgabe 4 erfolgen, falls diese als Touch-Screen-Monitor oder als ein Monitor mit Bedienelementen ausgebildet ist. Die eingegebenen Informationen über das Fahrziel werden von der Einheit zur Systemverwaltung an die Recheneinheit zur Fahrtroutenbestimmung 11 weitergegeben. Die Recheneinheit zur Fahrtroutenbestimmung 11 berechnet auf Basis der Daten, die auf Informationsträgern, die in den Laufwerken 2 und/oder 13 als digitale Karte zur Verfügung gestellt werden, eine Fahrtroute. Diese Fahrtroute kann über den Sende - und Empfänger vorrichtung 15 und die Funkverbindung 16 durch aktuelle Daten von der Dienstezentrale 17 ergänzt werden. Ferner wird die Position des Fahrzeugs miteinbezogen, die über die Einheit zur Positionsbestimmung 7 auf Basis der Informationen berechnet wird, die vom GPS Empfänger 8 und den Fahrzeugsensoren 9 geliefert werden. Die Fahrtroute wird an die Recheneinheit für die Ausgabe der Fahranweisungen 12 weitergegeben. Die Recheneinheit für die Ausgabe der Fahranweisungen 12 ermittelt nun markante Objekte, die entlang der Fahrtroute liegen und verknüpft die Bezeichnungen und/oder Beschreibungen dieser markanten Objekten, die auf dem Informationsträger in Laufwerk 2 gespeichert sind, mit Ortsbezügen und Richtungsangaben, so daß Fahranweisungen mit Bezug auf die markanten Objekte entstehen. Beispiele für Ortsbezüge sind: "vor, hinter, rechts/links von, an, neben, auf der Höhe von". Beispiele für Richtungsangaben sind: "rechts/links abbiegen, geradeaus weiterfahren, scharf links/rechts abbiegen, rechts/links einordnen, anhalten". Die Fahranweisungen werden nacheinander über die Audioausgabe 3 ausgegeben. Hierfür wird über die Einheit zur Positionsbestimmung die Position des Fahrzeugs überwacht. Auch hierzu bedient sich die Einheit zur Positionsbestimmung des GPS-Empfängers 8 und der Fahrzeugsensoren 9. Die auf diese Weise ermittelte aktuelle Position des Fahrzuegs wird mit der den markanten Objekten zugewiesenen Positionen in der digitalen Karte verglichen. Die auf ein markantes Objekt bezogene Fahranweisung wird in einer vorgebbaren Entfernunug vor Erreichen dieser Position ausgegeben. Die vorgebbare Entfernung kann dabei vom Straßentyp abhängig sein, d.h. auf einer Autobahn wird die Fahranweisung früher ausgegeben als auf einer schmalen Landstraße.

Wenn die Recheneinheit zur Fahrtroutenbestimmung z.B. festgelegt hat, daß in einer bestimmten Stadt hinter der Hauptpost rechts abgebogen werden soll, wird z.B. 150 m vor der Hauptpost von der Audioausgabe ausgegeben: "Hinter der Hauptpost rechts abbiegen". Die Recheneinheit für die Ausgabe der Fahranweisungen 12 ist daher so ausgebildet, daß sie die auf dem Informationsträger 2 gespeicherten Daten zu den markanten Objekten sowie die Ortsbezüge und Richtungsanggaben in Audiosignale umwandeln kann, die über die Audioausgabe 3 ausgegeben werden. Hierzu sind die Daten zu den markanten Objekten, die Ortsbezüge und Richtungsangaben vorzugsweise in Textform abgelegt, wobei der Text durch Zusätze ergänzt wird, die Hinweise zur Aussprache enthalten. Ferner besteht optional auch die Möglichkeit, den auszugebenden Text direkt als Audiosignal (z.B. als *.wav Datei) auf dem Datenträger abzulegen. Optional erfolgt eine Videoausgabe des markanten Objektes über die Videoausgabe 4. Z. B. kann also kurz vor der Hauptpost ein Bild des Gebäudes als Foto oder als Skizze eingeblendet werden. Insbesondere bei Gebäuden, an denen mehrere Straßen vorbeiführen, kann dabei ein solches Objekt mit mehreren Ansichten auf dem Informationsträger gespeichert sein, so daß dem Benutzer in Abhängigkeit von seiner Position die Ansicht geboten wird, die er sieht. Bei der optischen Darstellung der markanten Objekte muß ferner berücksichtigt werden, daß manche Objekte bei Nacht nicht sichtbar sind. Diese Information ist mit der Bezeichnung des Objektes zu speichern. In einem solchen Fall muß die Navigationsvorrichtung auf herkömmliche Fahranweisungen zurückgreifen.
Liegen markante Objekte von der Straße ab, so ist eine Anpassung des Ortsbezuges möglich, wenn die geographische Position mit gespeichert ist. Z.B. wird dann der Ortsbezug "Auf der Höhe von" gewählt.
Um Speicherplatz zu sparen, können auch Daten von markanten Objekten, die an Nebenstraßen liegen, anstatt auf dem Informationsträger in der Dienstezentrale 17 gespeichert sein oder der Navigationsvorrichtung über das Laufwerk 14 z. B. in Form einer Diskette oder über das Laufwerk 13 z. B. in Form einer CD oder DVD zugeführt werden. Insbesondere kann man so einem Benutzer zusätzlich Daten von markanten Objekten zur Verfügung stellen, indem Daten über die Dienstzentrale 17 oder über die Zusendung eines Informationsträgers für die Laufwerke 13 oder 14 übermittelt werden. Hierzu ist die Dienstezentrale 17 über eine nicht eingezeichnete Verbindung vorzugsweise mit dem Internet in Verbindung bringbar. Dies ermöglicht es, z.B. Geschäftskunden den Weg zur eigenen Firma für ihr Navigationsgerät zur Verfügung zu stellen. Unter Ausnutzung eines PC des Benutzers können solche Wegbeschreibungen in Form von Abfolgen von Fahranweisungen selbst erstellt werden. Bei Benutzung einer digitalen Kamera oder eines Scanners ist eine Ergänzug durch eine optische Darstellung von markanten Objekten möglich. Ferner ist es möglich, bei Daten von markanten Objekten, die von der Dienstzentrale 17 übermittelt werden, Werbeinformationen in die Übermittlung mit einzubinden und zumindest einen Teil der markanten Objekte in Verbindung mit Werbebotschaften darstellen. In der Dienstzentrale 17 kann hierfür ein nicht eingezeichneter Zähler vorhanden sein, der den Abruf dieser Werbeinformation zählt und dem Werber so in Rechnung stellen kann. Die Funkverbindung 16 zwischen Sende - und Empfänger vorrichtung 15 und Dienstezentrale 17 wird vorzugsweise über eine GSM Verbindung realisiert. Die austauschbaren Datenträger für die Laufwerke 12 und 13 sind vorzugsweise CD-ROM, DVD oder magnetooptisches Speichermedium. Für das Laufwerk 14 ist vorzugsweise eine Diskette, ein Halbleiterbaustein oder eine Memory-Card vorgesehen. Auf dieser Memory-Card kann auch ein Benutzerprofil gespeichert sein.

In Figur 2 ist ein Beispiel für die Videoausgabe dargestellt. In einer Bildschirmanzeige 30 ist ein markantes Objekt, hier eine Kirche 20, und ein Richtungshinweis, hier ein Abbiegepfeil 21, dargestellt. Zu dieser Bilddarstellung wird über die akustische Ausgabeeinheit 3 der Text "Hinter der Kirche rechts abbiegen" ausgegeben. Dies ist in der Bilddarstellung dadurch zu erkennen, daß der Abbiegepfeil 21 hinter der Kirche 20 abknickt. Anstelle des hier gewählten Symbols für die Kirche 20 kann auch eine bildhafte Darstellung als Foto erfolgen.

## Patentansprüche

1. Navigationsvorrichtung zur Navigation eines Fahrzeugs in einem Straßennetz mit einem Laufwerk (13) zur Zuführung eines Informationsträgers mit einer digitalen Straßenkarte, wobei Daten markanter Objekte auf dem Informationsträger gespeichert sind und wobei den markanten Objekten jeweils eine Position in der digitalen Karte zugewiesen ist, und mit einer Audioausgabe (3) zur akustischen Ausgabe von Fahranweisungen, wobei Bezeichnungen und/oder Beschreibungen der markanten Objekte mit Richtungsangahen und Ortshezügen verknüpft sind, **gekennzeichnet durch** eine Videoausgabe (4) zur optischen Ausgabe eines markanten Objekts (20), auf das sich die Fahranweisung bezieht, zusätzlich zu der akustischen Ausgabe, wobei in der Videoausgabe (4) die Richtungsangaben (21) optisch in Verbindung mit den markanten Objekten (20) darstellbar sind und wobei mehrere Ansichten eines markanten Objektes (20) so auf dem Informationsträger (2) gespeichert sind, dass einem Benutzer in der Videoausgabe (4) in Abhängigkeit von seiner Position diejenige Ansicht des markanten Objekts geboten wird, die der Benutzer sieht.

2. Navigationsvorrichtung nach Anspruch 1, **gekennzeichnet durch** ein zusätzliches Laufwerk (14) zur Zuführung von Daten zusätzlicher, markanter Objekte (20), einschließlich ihrer Position in der digitalen Karte.

3. Navigationsvorrichtung nach einem der vorhergehenden Ansprüche, **gekennzeichnet durch** eine Sende- und Empfangsvorrichtung (15) für eine Funkverbindung (16) zur Zuführung von Daten zusätzlicher, markanter Objekte (20), einschließlich ihrer Position in der digitalen Karte.

4. Navigationsvorrichtung nach einem der vorhergehenden Ansprüche, **gekennzeichnet durch** eine Sende- und Empfangsvorrichtung (15) zur Erstellung einer Funkverbindung (16) zwischen der Navigationsvorrichtung (1) und einer Dienstezentrale (17).

5. Navigationsvorrichtung nach Anspruch 4, **dadurch gekennzeichnet, dass** in der Dienstezentrale (17) zusätzliche Daten markanter Objekte (20) gespeichert sind.

6. Navigationsvorrichtung nach einem der Ansprüche 4 oder 5, **dadurch gekennzeichnet, dass** die Dienstezentrale (17) mit dem Internet in Verbindung bringbar ist.

7. Navigationsvorrichtung nach einem der vorhergehenden Ansprüche, **dadurch gekennzeichnet, dass** zumindest ein Teil der Navigationsvorrichtung (1) als Mobilteil aus dem Fahrzeug entnehmbar ist.

8. Navigationsvorrichtung nach einem der vorhergehenden Ansprüche, **dadurch gekennzeichnet, dass** Abfolgen von Fahranweisungen durch einen Benutzer erstellbar und der Navigationsvorrichtung (1) zuführbar sind.

9. Navigationsvorrichtung nach einem der vorhergehenden Ansprüche, **dadurch gekennzeichnet, dass** eine auf ein markantes Objekt (20) bezogene Fahranweisung in einer vorgebbaren Entfernung vor dem markanten Objekt (20) ausgebbar ist und dass die vorgebbare Entfernung von dem befahrenen Straßentyp abhängig ist.

10. Navigationsvorrichtung nach einem der vorhergehenden Ansprüche, **dadurch gekennzeichnet, dass** ein Foto eines markanten Objekts (20) ausgebbar ist.

## Claims

1. Navigation device for navigating a vehicle in a road network having a disk drive (13) for supplying an information carrier with a digital road map, data of significant objects being stored on the information carrier and in each case a position on the digital map being assigned to the significant objects, and having an audio output means (3) for acoustically outputting travel instructions, designations and/or descriptions of the significant objects being logically linked to directional data and references to locations, **characterized by** a video output means (4) for visually outputting a significant object (20) to which the travel instruction relates, in addition to the acoustic output means, the directional data (21) being capable of being represented visually in the video output means (4) in conjunction with the significant objects (20), and a plurality of views of a significant object (20) being stored on the information carrier (2) in such a way that that view of the significant object which the user sees is presented to a user in the video output means (4) as a function of its position.

2. Navigation device according to Claim 1, **characterized by** an additional disk drive (14) for feeding data of additional significant objects (20), including their position on the digital map.

3. Navigation device according to one of the preceding claims, **characterized by** a transceiver device (15) for a radio link (16) for feeding data of additional significant objects (20), including their position on the digital map.

4. Navigation device according to one of the preceding claims, **characterized by** a transceiver device (15) for producing a radio link (16) between the navigation device (1) and a service centre (17).

5. Navigation device according to Claim 4, **characterized in that** additional data of significant objects (20) is stored in the service centre (17).

6. Navigation device according to one of Claims 4 or 5, **characterized in that** the service centre (17) can be connected to the Internet.

7. Navigation device according to one of the preceding claims, **characterized in that** at least a part of the navigation device (1) can be removed from the vehicle as a mobile part.

8. Navigation device according to one of the preceding claims, **characterized in that** sequences of travel instructions can be produced by a user and fed to the navigation device (1).

9. Navigation device according to one of the preceding claims, **characterized in that** a travel instruction which relates to a significant object (20) can be output at a predefinable distance from the significant object (20), and **in that** the predefinable distance is dependent upon the type of road travelled on.

10. Navigation device according to one of the preceding claims, **characterized in that** a photo of a significant object (20) can be output.

## Revendications

1. Dispositif de navigation pour guider un véhicule dans un réseau routier comportant un lecteur (13) recevant un support d'information contenant une carte routière numérique, avec enregistrement des données d'objets marquants sur le support d'information et attribution d'une position des objets marquants sur la carte numérique, ainsi qu'un moyen d'émission audio (3) pour émettre de manière acoustique des indications de conduite, les références et/ou descriptions des objets marquants étant combinées à des indications de direction et des indications de lieu,
**caractérisé par**
un moyen d'émission vidéo (4) pour émettre de manière optique un objet marquant (20) auquel fait référence l'indication de conduite en plus de l'émission acoustique, le moyen d'émission vidéo (4) représentant les indications de direction (21) de façon optique en liaison avec les objets marquants (20), dont plusieurs vues d'un objet marquant (20) sont enregistrées sur le support d'information (2) pour présenter à l'utilisateur par le moyen d'émission vidéo (4), la vue de l'objet marquant qui correspond à la position de l'utilisateur.

2. Dispositif de navigation selon la revendication 1,
**caractérisé par**
un lecteur (14) supplémentaire pour fournir des données d'objets marquants supplémentaires (20) y compris leurs positions sur la carte numérique.

3. Dispositif de navigation selon l'une des revendications précédentes,
**caractérisée par**
un dispositif d'émission et de réception (15) pour une liaison radio (16) fournissant les données d'objets marquants supplémentaires (20) y compris leurs positions sur la carte numérique.

4. Dispositif de navigation selon l'une des revendications précédentes,
**caractérisé par**
un dispositif d'émission et de réception (15) pour établir une liaison radio (16) entre le dispositif de navigation (1) et une centrale de service (17).

5. Dispositif de navigation selon la revendication 4,
**caractérisé en ce que**
la centrale de service (17) contient en mémoire des données supplémentaires d'objets marquants (20).

6. Dispositif de navigation selon l'une des revendications 4 ou 5,
**caractérisé en ce que**
la centrale de service (17) est reliée par Internet.

7. Dispositif de navigation selon l'une des revendications précédentes,
**caractérisé en ce qu'**
au moins une partie du dispositif de navigation (1) est une partie mobile que l'on peut extraire du véhicule.

8. Dispositif de navigation selon l'une des revendications précédentes,
**caractérisé en ce que**
l'utilisateur établit la succession des indications de conduite et les fournit au dispositif de navigation (1).

9. Dispositif de navigation selon l'une des revendications précédentes,
**caractérisé en ce qu'**
une indication de conduite rapportée à un objet marquant (20) est émise à une distance prédéterminée avant d'arriver à l'objet marquant (20) et cette distance prédéterminée dépend du type de route utilisée.

10. Dispositif de navigation selon l'une des revendications précédentes,
**caractérisé en ce que**
l'on émet une photo d'un objet marquant (20).
